# EUROPEAN PATENT APPLICATION

(11) **EP 4 650 621 A1**
(43) Date of publication of application: **19.11.2025**
(21) Application number: 24199948.1
(22) Date of filing: 12.09.2024
(51) Int. Cl.: F16F 13/14

(54) **LIQUID RUBBER COMPOSITE NODE FOR REDUCING VEHICLE WHEEL-RAIL WEAR AND VIBRATION NOISE BASED ON LIQUID DAMPING, SINGLE STAGE SUSPENSION SYSTEM AND RAILWAY VEHICLE**

(30) Priority: 17.05.2024 CN 202410613898; 17.05.2024 CN 202410613902; 17.05.2024 CN 202410613904
(71) Applicant: Zhuzhou Times New Material Technology Co., Ltd, Tianyuan District Zhuzhou Hunan 412007 (CN)
(72) Inventor: Rong, Jigang, Zhuzhou, 412007 (CN); Luo, Jun, Zhuzhou, 412007 (CN); Chen, Junhui, Zhuzhou, 412007 (CN); Tang, Yunlun, Zhuzhou, 412007 (CN); Zuo, Binhuai, Zhuzhou, 412007 (CN); Zhao, Bin, Zhuzhou, 412007 (CN); Li, Jing, Zhuzhou, 412007 (CN); Zhang, Yuxiang, Zhuzhou, 412007 (CN); Deng, Mengjun, Zhuzhou, 412007 (CN); Pan, Wu, Zhuzhou, 412007 (CN); Zeng, Xianhui, Zhuzhou, 412007 (CN)
(74) Representative: Zhu, Junyi

(57) **Abstract**

The present invention provides a liquid rubber composite node for reducing vehicle wheel-rail wear and vibration noise based on liquid damping, comprising a mandrel with a mandrel ball in a middle, rubber layers vulcanized and bonded around the mandrel ball, and an inner sleeve vulcanized and bonded with the rubber layer at a periphery of the rubber layers; a front cavity and a rear cavity with rubber layers at cavity bottoms are arranged in the inner sleeve on a front side and a rear side of the liquid composite node respectively; the mandrel ball is provided with a flow channel for communicating the front cavity and the rear cavity; the front cavity and the rear cavity are flat, the axial widths of the axial sections of the two cavities are greater than radial heights, and the front cavity, the rear cavity and the flow channel are filled with liquid. The present invention can achieve the variable stiffness characteristic of low static stiffness and high dynamic stiffness of a single stage suspension, promote the upgrade of vibration and noise reduction level technologies in the railway transit industry, and help the safe, high-speed, green and intelligent development of railway transit.

## Description

### Technical Field

The present invention relates to a liquid rubber composite node for reducing wheel-rail wear and vibration noise of high-speed railways or urban railway transit vehicles, a single stage suspension system and a railway vehicle, which belongs to the technical field of vibration reduction and noise reduction of railway transit vehicles.

### Background

With the rapid development of the railway transit, the operation speed of a train has become higher and higher. Due to the influence of road irregularity, the very small fluctuation of a railway may cause high frequency load impact on the train operated at high speed and cause high frequency vibration. In addition, the excitation of external factors such as bridges and tunnels when the train is operated at high speed may also cause high frequency vibration. With respect to the problems of high wheel-rail wear and high operation noise in the operation of the existing railway transit vehicles, recently, many inventors have proposed the use of the liquid rubber composite node in a suspension system of the railway vehicles for the technical research of vibration and noise reduction according to the mature experience of the automotive liquid rubber composite technology in the automotive field. The liquid composite node is a connection joint between a train bogie and a tumbler. Because a tumbler terminal is connected with a wheel set axle box, and the traction force and the braking force of the train are borne by this joint, the liquid composite node mainly bears the longitudinal load along the operation direction of the train.

According to dynamic requirements, when a tumbler joint is operated in a straight line at high speed (producing high frequency vibration), a large radial stiffness along the operation direction shall be provided to ensure the operational stability to increase the critical speed; and When passing a curve (producing low frequency and large amplitude), a small stiffness is provided to ensure good curve passing performance and reduce wear. Because the liquid composite node is easier to skew at the small stiffness, the tumbler is easier to swing and wheels can adaptively reduce an attack angle with the railway. Thus, the wear is reduced. The stiffness required for high frequency vibration is the called dynamic stiffness in the industry, and the stiffness required for low frequency vibration is the called static stiffness in the industry. Thus, vibration and noise reduction of the vehicles with small curve radius and complicated road conditions of urban railway transit can be improved, and the wheel-rail wear can be reduced. At present, it is difficult for an ordinary node to achieve a large ratio of dynamic stiffness and static stiffness, so further research and improvement are still needed.

### Summary

A purpose of the present invention is to provide a liquid rubber composite node for reducing vehicle wheel-rail wear and vibration noise based on a composite damping technology of liquid rubber, a single stage suspension system and a railway vehicle with respect to the problem that the existing urban railway transit vehicle has high wheel-rail wear and the effect of vibration reduction and noise reduction cannot satisfy environmental needs, so as to effectively overcome the problems of high vehicle wheel-rail wear and high noise when an urban railway transit passes through road conditions with small curve radius and complicated routes, achieve the variable stiffness characteristic of low static stiffness and high dynamic stiffness of a single stage suspension, promote the upgrade of vibration and noise reduction level technologies in the railway transit industry, and help the safe, high-speed, green and intelligent development of railway transit.

To achieve the purpose, the present invention provides a liquid rubber composite node for reducing vehicle wheel-rail wear and vibration noise based on liquid damping, comprising a mandrel with a mandrel ball in a middle, rubber layers vulcanized and bonded around the mandrel ball, and an inner sleeve vulcanized and bonded with the rubber layer at a periphery of the rubber layers; a front cavity and a rear cavity with rubber layers at cavity bottoms are arranged in the inner sleeve on a front side and a rear side of the liquid composite node respectively; the mandrel ball is provided with a flow channel for communicating the front cavity and the rear cavity; the front cavity and the rear cavity are flat, the axial widths of the axial sections of the two cavities are greater than radial heights, and the front cavity, the rear cavity and the flow channel are filled with liquid.

The front cavity and the rear cavity are arranged in such a way that the inner sleeve on the front side and the rear side of the liquid composite node is provided with a front frame port and a rear frame port; a front sealing cover plate and a rear sealing cover plate are arranged on the front frame port and the rear frame port respectively; the front sealing cover plate, the front frame port and the rubber layer form the front cavity; and the rear sealing cover plate, the rear frame port and the rubber layer form the rear cavity.

A radian r between two edges of the radial sections of the front cavity and the rear cavity is 90-120°.

The front and rear periphery of the middle of the mandrel ball of the mandrel is a cylindrical surface, and central regions of the rubber layers at the bottoms of the front cavity and the rear cavity are middle uniform regions with uniform thickness.

The left and right ends of the inner sleeve are furled inward respectively to form a left retaining ring and a right retaining ring; an inner wall of the left retaining ring is a left stopping inner conical surface inclined to the left, and an inner wall of the right retaining ring is a right stopping inner conical surface inclined to the right; the rubber layer between the left stopping inner conical surface and a left end surface of the mandrel ball is a left compression-expansion end, and the rubber layer between the right stopping inner conical surface and a right end surface of the mandrel ball is a right compression-expansion end; a distance is formed among the left and right ends of the inner sleeve and the mandrel, to form a left compression-expansion space capable of making the left compression-expansion end to expand to the left and a right compression-expansion space capable of making the right compression-expansion end to expand to the right.

The thickness of the middle uniform regions is less than the thickness of the left compression-expansion end and the right compression-expansion end, a radial region where the middle uniform regions are located is a radial large-stiffness region A, and a radial region where the left compression-expansion end and the right compression-expansion end are located is a radial weak-stiffness region B.

The middle uniform regions of the rubber layers at the bottoms of the front cavity and the rear cavity are provided with a front pit and a rear pit respectively; inner walls of the front pit and the rear pit are provided with a rigid front basin and a rear basin respectively; the bottoms of the front sealing cover plate and the rear sealing cover plate are provided with a front pressing table and a rear pressing table which extend into basin cavities of the front basin and the rear basin respectively; liquid containing spaces are formed between bottom surfaces of the front pressing table and the rear pressing table and bottoms of the front basin and the rear basin; and liquid flow gaps are formed between the periphery of the front pressing table and the rear pressing table and the inner walls of the front basin and the rear basin respectively.

Both ends of the flow channel are communicated with the liquid containing space of the front basin and the liquid containing space of the rear basin respectively.

An outer sleeve sheathed outside the inner sleeve is also included.

A liquid injection flow channel communicated with the flow channel is arranged along an axis line at one end of the mandrel.

The left compression-expansion end and the right compression-expansion end have an angle of 40-60° relative to the axis of the mandrel.

A left pressing groove and a right pressing groove are V-shaped grooves, and wall surfaces of a right pressing groove wall and a left pressing groove wall are bevels.

The wall surfaces of the right pressing groove wall and the left pressing groove wall are perpendicular planes perpendicular to the axis of the mandrel; the inner walls of both ends of the front sealing cover plate and the rear sealing cover plate are provided with a left baffle rib plate and a right baffle rib plate which are radially stretched respectively; the left baffle rib plate and the right baffle rib plate are pasted on the right pressing groove wall and the left pressing groove wall respectively and can relatively slide vertically; and the front cavity and the rear cavity are divided from left to right into a left buffer region, a middle radial pressure regulating region and a right buffer region.

The left baffle rib plate is provided with a left buffer flow channel for communicating the left buffer region and the middle radial pressure regulating region, and the right baffle rib plate is provided with a right buffer flow channel for communicating the right buffer region and the middle radial pressure regulating region.

A left liquid passing gap through which liquid passes is formed between the left baffle rib plate and a right groove wall of the left pressing groove, and a right liquid passing gap through which liquid passes is formed between the right baffle rib plate and a left groove wall of the right pressing groove.

The upper and lower ends of the bottoms of the front cavity and the rear cavity are radially sunk respectively to form an upper side pressing groove and a lower side pressing groove; and an upper restriction bulge and a lower restriction bulge which are inserted into the upper side pressing groove and the lower side pressing groove are arranged on the upper and lower sides of the front sealing cover plate and the rear sealing cover plate respectively.

An upper liquid passing gap through which liquid passes is formed between the upper restriction bulge and a lower side groove wall of the upper side pressing groove, and a lower liquid passing gap through which liquid passes is formed between the lower restriction bulge and an upper side groove wall of the lower side pressing groove.

A single stage suspension system comprises a wheel set, an axle box, a tumbler, a frame and the above liquid rubber composite node. The liquid rubber composite node is installed in the tumbler and is connected with the wheel set, the axle box and the frame.

A railway vehicle comprises a vehicle body and a bogie, and the bogie uses the above single stage suspension system.

The present invention has the following beneficial effects:
1. Through the innovation and improvement of liquid and rubber composite technologies, the longitudinal variable stiffness characteristic of the positioning node with the change of line conditions can be achieved. The linear operation stability and the small-curve low-wear passing ability can be simultaneously considered. The low longitudinal stiffness design reduces the wheel-rail dynamic acting force and rail corrugation, reduces wheel-rail wear and vehicle damage to the railway, prolongs the wheel maintenance cycle and extends the wheel life. Cross-line operation of the high-speed railway and the existing vehicles is realized, and the utilization rate of the line is improved. At the same time, the large dynamic performance improves the operation stability and the critical speed of the vehicle, finally greatly reduces the operation and maintenance cost and improves the operation quality of the vehicle.
2. The new liquid rubber composite technology is used to replace the existing critical components of vibration reduction and noise reduction. Due to the variable stiffness characteristic that a local region in which the new liquid composite node or liquid rubber variable stiffness conical spring is located is increased in stiffness with the increase of frequency, low stiffness at low frequency can be achieved and the coupling strength is reduced, which is conducive to inhibiting primary instability. The high stiffness characteristic at high frequency ensures stability and critical speed. The stiffness characteristic parameters can be automatically changed according to taper parameters, etc. of different curves and wheel treads, which has a wider range of adaptation to the tread taper, so as to effectively alleviate the dynamic problems such as primary instability that is gradually obvious currently.
3. The traditional design concept of vertical variable stiffness is broken through, and the design idea of a longitudinal variable stiffness liquid composite conical spring is proposed for the first time. The longitudinal variable stiffness liquid rubber conical spring is used. When subjected to a longitudinal load, the conical spring has a low longitudinal stiffness at a low-frequency load and has a high longitudinal stiffness at a high-frequency load, so that a high longitudinal stiffness ratio at different frequency loads is achieved and the influence on vertical stiffness and transverse stiffness is small under improvement and optimization.
4. An adaptive liquid composite node or a liquid rubber variable stiffness conical spring is used. When a train is subjected to high frequency vibration in straight-line operation, the stiffness of the adaptive liquid rubber composite node along the operation direction is increased immediately, which can ensure the operation stability and increase the critical speed. When the train passes through a curve or the vibration frequency of acceleration or deceleration is reduced, the stiffness of the adaptive liquid rubber composite node along the operation direction is reduced to satisfy the requirement of reducing wheel-rail wear or buffering the impact of the longitudinal load. While the above stiffness change requirements are obtained, the axial stiffness can be increased to an ideal height to avoid large transverse swing of a train body and the bogie relative to the wheel set.
5. The present invention conducts decoupling regulation for the adaptive liquid rubber composite node or the liquid rubber variable stiffness conical spring, and a decoupling regulation method comprises regulating the static stiffness of the liquid composite node by changing a ratio of shear deformation and compression deformation of the rubber body under the action of the static load, and regulating the dynamic stiffness of the liquid composite node by changing a ratio of shear deformation and compression deformation of the rubber body under the action of fluid pressure to achieve the static stiffness of a large axle diameter ratio. Moreover, the regulation process does not affect the dynamic stiffness, so the decoupling regulation of static stiffness and dynamic stiffness is realized.

### Description of Drawings

Fig. 1 is a three-dimensional schematic diagram of a liquid composite node of embodiment 1 with an outer sleeve hidden;
Fig. 2 is a three-dimensional schematic diagram of Fig. 1 with a front sealing cover plate and a rear sealing cover plate hidden;
Fig. 3 is an axial sectional view of a liquid composite node in embodiment 1; a left arrow points to the front of the operation direction of a train; to make the view clear, the section lines of a mandrel and a mandrel ball thereof are hidden in this view and some of the following views;
Fig. 4 is a local amplified schematic diagram of Fig. 3;
Fig. 5 is a radial sectional view of a liquid composite node in embodiment 1;
Fig. 6 is a radial sectional view of a liquid composite node in embodiment 2;
Fig. 7 is a local amplified schematic diagram of Fig. 6;
Fig. 8 is a three-dimensional schematic diagram of separation of a front sealing cover plate and a front basin in embodiment 2, and the front sealing cover plate is sectioned radially;
Fig. 9 is an axial sectional view of a liquid composite node in embodiment 3;
Fig. 10 is a local amplified view of Fig. 9;
Fig. 11 is an axial sectional view of a liquid composite node in embodiment 4;
Fig. 12 is a local amplified schematic diagram of Fig. 11;
Fig. 13 is a local sectional view of a liquid composite node in embodiment 5;
Fig. 14 is a three-dimensional schematic diagram of a left baffle rib plate in embodiment 5;
Fig. 15 is an axial sectional view of a liquid composite node in embodiment 6; an arrow in the figure points to the front; to make the view clear, the section lines of a mandrel and a mandrel ball thereof are hidden in this view and the following views;
Fig. 16 is a local amplified view of Fig. 15;
Fig. 17 is a radial sectional view of a liquid composite node in embodiment 7; an arrow B in the figure points to the top; and an arrow C points to the front;
Fig. 18 is an axial sectional view of a liquid composite node in embodiment 8;
Fig. 19 is a local amplified schematic diagram of Fig. 18;
Fig. 20 is a structural schematic diagram of a suspension system in embodiment 9.

In the figures: 1 mandrel; 101 mandrel ball; 102 flow channel; 103 liquid injection flow channel; 104 left outer conical surface; 105 right outer conical surface; 2 rubber layer; 201 middle uniform region; 202 left compression-expansion end; 203 right compression-expansion end; 3 inner sleeve body; 301 front frame port; 302 rear frame port; 303 left retaining ring; 3031 left stopping inner conical surface; 304 right retaining ring; 3041 right stopping inner conical surface; 4 front cavity; 41 left pressing groove; 411 left pressing groove wall; 42 right pressing groove; 421 right pressing groove wall; 5 rear cavity; 501 left buffer region; 502 middle radial pressure regulating region; 503 right buffer region; 6 front sealing cover plate; 61 left baffle rib plate; 610 left buffer flow channel; 611 left liquid passing gap; 62 right baffle rib plate; 620 right buffer flow channel; 621 right liquid passing gap; 601 front pressing table; 63 upper side pressing groove; 631 upper side groove wall; 64 lower side pressing groove; 641 lower side groove wall; 65 upper restriction bulge; 66 lower restriction bulge; 67 upper liquid passing gap; 68 lower liquid passing gap; 7 rear sealing cover plate; 701 rear pressing table; 8 left compression-expansion space; 9 right compression-expansion space; 10 outer sleeve; 11 front basin; 12 rear basin; 13 liquid containing space; 14 liquid flow gap; 15 wheel set; 16 axle box; 17 tumbler; 18 frame; and 19 liquid rubber composite node.

### Detailed Description

The present invention is further described below in combination with the drawings and the specific embodiments.

### Embodiment 1

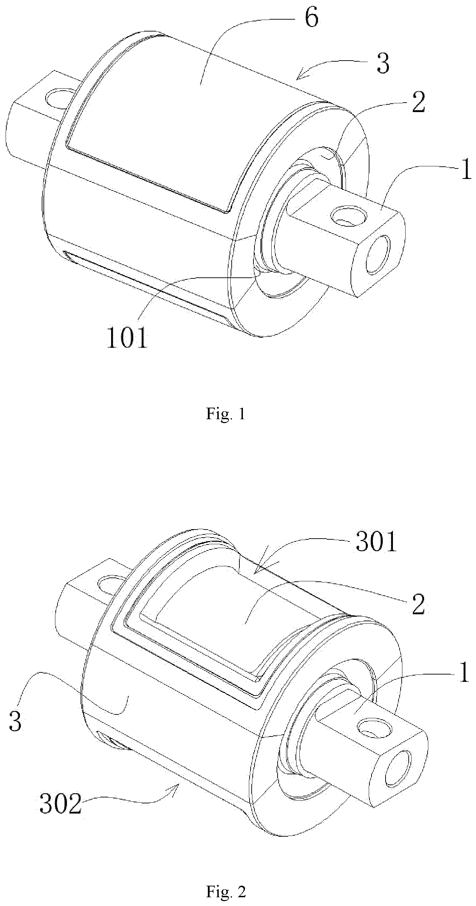

A liquid rubber composite node for reducing vehicle wheel-rail wear and vibration noise based on liquid damping, as shown in Fig. 1 and Fig. 2, comprises a mandrel 1 with a mandrel ball 101 in a middle, rubber layers 2 vulcanized and bonded around the mandrel ball 101, and an inner sleeve 3 vulcanized and bonded with the rubber layer at a periphery of the rubber layer 2; a front cavity 4 and a rear cavity 5 with rubber layers 2 at cavity bottoms are arranged in the inner sleeve 3 on a front side and a rear side of the liquid composite node respectively; the mandrel ball 101 is provided with a flow channel 102 for communicating the front cavity 4 and the rear cavity 5, and the front cavity 4, the rear cavity 5 and the flow channel 102 are filled with liquid; and the axial widths of the front cavity 4 and the rear cavity 5 along the axial sections are greater than radial heights. In this arrangement, the liquid composite node forms two factors that affect the radial stiffness of the front and back (along the operation direction of a train). The first factor is the stiffness of the rubber layers 2, and the second factor is the amount of liquid flow that can pass through the flow channel 102 between the front cavity 4 and the rear cavity 5.

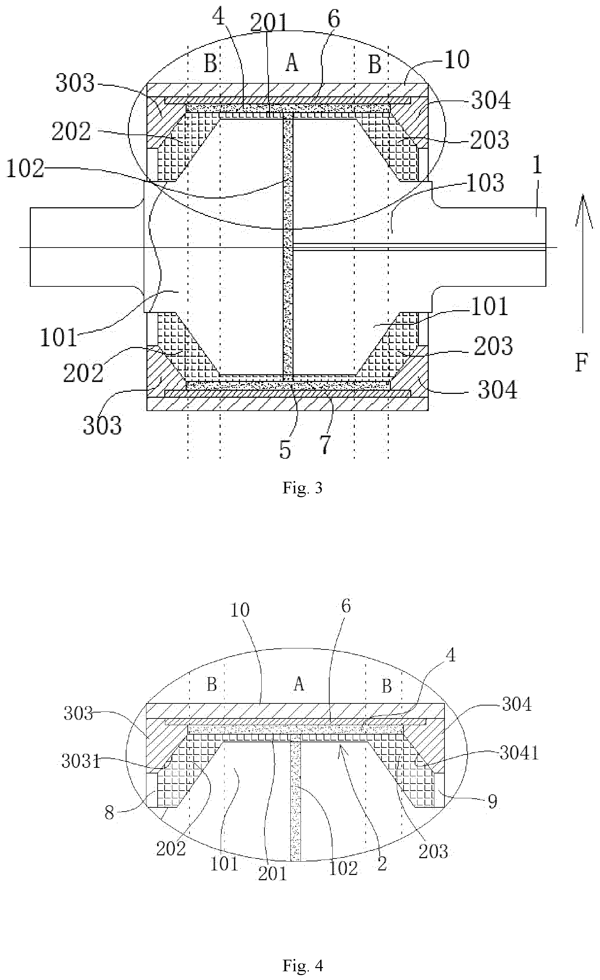

About the first factor: In this arrangement, the stiffness of the rubber layers 2 is mainly determined by the rubber material and structural features. The rubber material is selected conventionally. The structural features of the rubber layers 2 are that the middle thickness of the mandrel ball 101 is limited, so the compression is limited, and the stiffness is increased abruptly when the amplitude is large. However, in this arrangement, the rubber layers 2 located on the left and right sides of the mandrel ball 101 can be compressed to the left and right sides respectively, with large compression and small variable stiffness. As shown in Fig. 3 and Fig. 4, when the front cavity 4 is stressed backward and the liquid flows to the rear cavity 5, the front cavity 4 is compressed by the front sealing cover plate 3, and the rubber layers 2 on the left and right sides of the mandrel ball 101 have large deformation and small variable stiffness under the influence of liquid compression.

About the second factor: when the vibration frequency is low and the vibration amplitude is large, especially when the train is accelerated or decelerated, the load impact along the operation direction of the train can have time to make the liquid flow through the flow channel 102 between the front cavity 4 and the rear cavity 5, so that one cavity in the front cavity and the rear cavity is compressed and the other cavity is expanded. The liquid composite node shows low stiffness. When the vibration frequency is high, on the one hand, because the flow direction of the liquid in the flow channel 102 is constantly reversed in a very short time and the liquid cannot flow directionally for a long time, the liquid in the flow channel 102 tends to be unable to flow with the increase of the frequency. Thus, the front cavity 4 and the rear cavity 5 become difficult to compress, so as to increase the stiffness. On the other hand, increasing a ratio between the cross-sectional area of the front cavity 4 and the rear cavity 5 and the cross-sectional area of the flow channel makes it more difficult for the liquid in the front cavity 4 and the rear cavity 5 away from the periphery of a flow channel port to flow to the flow channel 102 in a short time, which directly improves the stiffness of the liquid composite node along the operation direction of the train. In this way, the purpose of increasing a ratio of dynamic stiffness and static stiffness (accurately expressed as a stiffness ratio of high frequency vibration and low frequency vibration) is achieved.

To sum up, the front cavity 4 and the rear cavity 5 in the present application can greatly limit the forward and backward stiffness by the thickness of the rubber layers 2 at the front and rear sides of the mandrel ball 101, so as to ensure the rigidity requirements under high frequency vibration, and also increase the ratio of the cross-sectional area of the front cavity 4 and the rear cavity 5 and the cross-sectional area of the flow channel, so as to ensure that greater stiffness is obtained under high frequency vibration.

The front cavity 4 and the rear cavity 5 are arranged in such a way that the inner sleeve 3 on the front side and the rear side of the liquid composite node is provided with a front frame port 301 and a rear frame port 302; a front sealing cover plate 6 and a rear sealing cover plate 7 are arranged on the front frame port 301 and the rear frame port 302 respectively; the front sealing cover plate 6, the front frame port 301 and the rubber layer 2 form the front cavity 4; and the rear sealing cover plate 7, the rear frame port 302 and the rubber layer 2 form the rear cavity 5. This arrangement is to facilitate the placement and demoulding of a vulcanization mold.

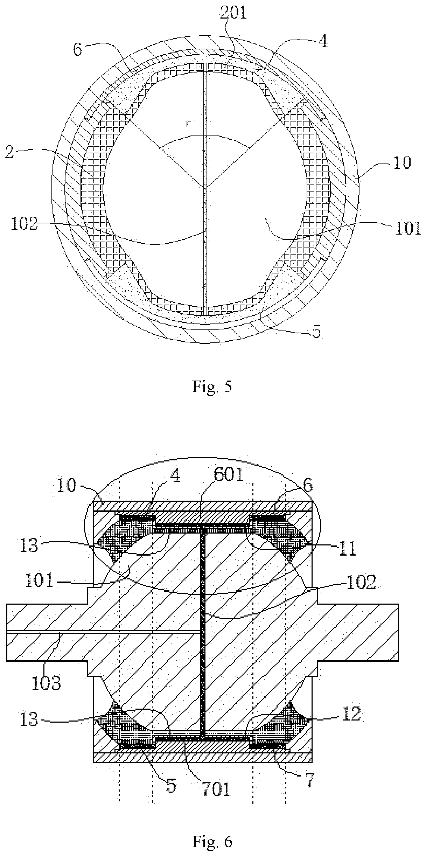

As shown in Fig. 5, a radian r between two edges of the radial sections of the front cavity 4 and the rear cavity 5 is 90-120°.

As shown in Fig. 3, the front and rear periphery of the middle of the mandrel ball 101 of the mandrel 1 is a cylindrical surface, and central regions of the rubber layers 2 at the bottoms of the front cavity 4 and the rear cavity 5 are middle uniform regions 201 with uniform thickness. This is conducive to the control of the forward and backward radial stiffness.

As shown in Fig. 4, the left and right ends of the inner sleeve 3 are furled inward respectively to form a left retaining ring 303 and a right retaining ring 304; an inner wall of the left retaining ring 303 is a left stopping inner conical surface 3031 inclined to the left, and an inner wall of the right retaining ring 304 is a right stopping inner conical surface 3041 inclined to the right, so as to control the axial stiffness of the liquid composite node; the rubber layer between the left stopping inner conical surface 3031 and a left end surface of the mandrel ball 101 is a left compression-expansion end 202, and the rubber layer between the right stopping inner conical surface 3041 and a right end surface of the mandrel ball 101 is a right compression-expansion end 203; a distance is formed among the left and right ends of the inner sleeve 3 and the mandrel 1, to form a left compression-expansion space 8 capable of making the left compression-expansion end 202 to expand to the left and a right compression-expansion space 9 capable of making the right compression-expansion end 203 to expand to the right. In this way, when the front cavity 4 and the rear cavity 5 are compressed, the left compression-expansion end 202 and the right compression-expansion end 203 can be expanded out to the left and right sides respectively, so as to adapt to the requirement of weak radial stiffness at low frequency and large amplitude.

The thickness of the middle uniform regions 201 is less than the thickness of the left compression-expansion end 202 and the right compression-expansion end 203, a radial region where the middle uniform regions 201 are located is a radial large-stiffness region A, and a radial region where the left compression-expansion end 202 and the right compression-expansion end 203 are located is a radial weak-stiffness region B. In this way, the stiffness difference between high frequency vibration and low frequency vibration can be further increased.

The above liquid composite node further comprises an outer sleeve 10 sheathed outside the inner sleeve 3 to make the inner sleeve 3 become a whole.

A liquid injection flow channel 103 communicated with the flow channel 102 is arranged along an axis line at one end of the mandrel 1 and used for injecting liquid.

### Embodiment 2

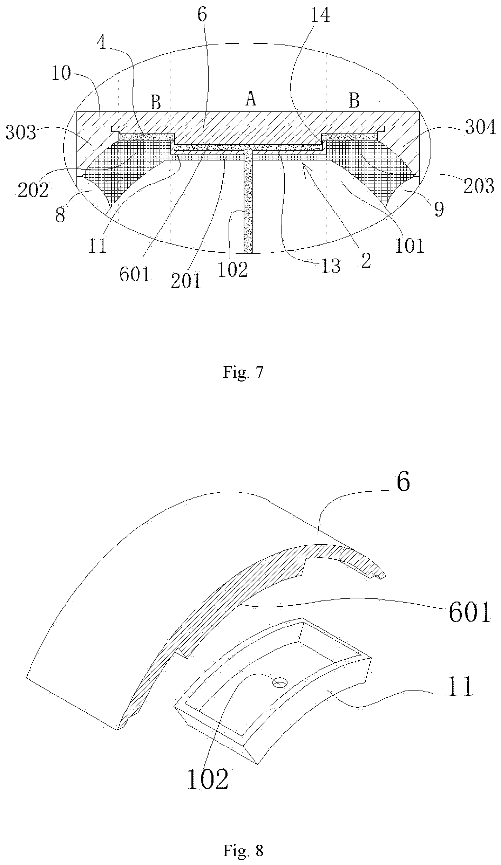

The present embodiment is an improvement over the above embodiment. As shown in Fig. 6 to Fig. 8, the middle uniform regions 201 of the rubber layers 2 at the bottoms of the front cavity 4 and the rear cavity 5 are provided with a front pit and a rear pit respectively; inner walls of the front pit and the rear pit are provided with a rigid front basin 11 and a rear basin 12 respectively; the bottoms of the front sealing cover plate 6 and the rear sealing cover plate 7 are provided with a front pressing table 601 and a rear pressing table 701 which extend into the front basin 11 and the rear basin 12 respectively; liquid containing spaces 13 are formed between bottom surfaces of the front pressing table 601 and the rear pressing table 701 and bottoms of the front basin 11 and the rear basin 12; and liquid flow gaps 14 are formed between the periphery of the front pressing table 601 and the rear pressing table 701 and the inner walls of the front basin 11 and the rear basin 12 respectively. Both ends of the flow channel 102 are communicated with the liquid containing space 13 of the front basin 11 and the liquid containing space 13 of the rear basin 12 respectively.

In this way, when impacted by a high frequency load, the liquid in the liquid containing space 13 still cannot flow through the liquid flow gap 14 and the flow channel 102. Because the front basin 11 and the rear basin 12 are rigid bodies, the liquid in the liquid containing space 13 cannot expand around. The forward and backward stiffness of the liquid composite node is completely determined by the middle uniform region 201 of the rubber layer 2 in the large-stiffness region A, which prevents the left compression-expansion end 202 and the right compression-expansion end 203 of the weak-stiffness region B on both sides of the mandrel 1 from participating in stiffness adjustment. Thus, the liquid composite node can obtain greater stiffness under high frequency vibration. In low frequency and large amplitude vibration, taking the backward impact load (the previous stage of a vibration) born by the front side of the liquid composite node as an example, the front sealing cover plate 6 pushes the front pressing table 601 to apply pressure to the liquid in the liquid containing space 13 of the front basin 11. The liquid in the liquid containing space 13 can flow out through the liquid flow gap 14 and the flow channel 102. Part of the liquid flows into the front cavity 4 through the liquid flow gap 14 to make the left compression-expansion end 202 and the right compression-expansion end 203 expand outwards. The other part of the liquid which flows out through the flow channel 102 flows into the liquid containing space 13 of the rear basin 12 and the rear cavity 5 under negative pressure. When the mandrel 1 keeps relatively static, the outer sleeve 10 and the inner sleeve 3 produce backward displacement relative to the mandrel 1 and the stiffness of the liquid composite node is reduced. The above process is reversed in the next stage of a vibration.

### Embodiment 3

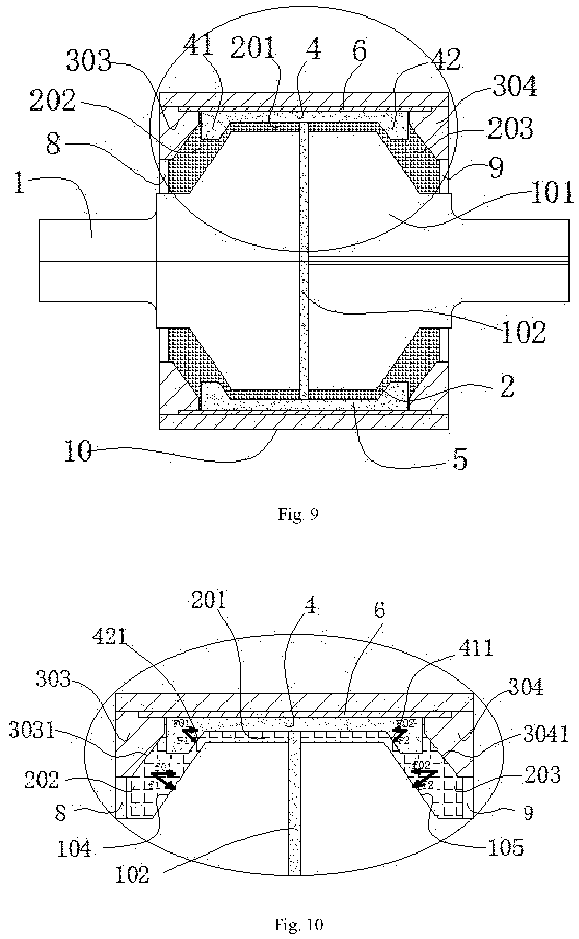

The present embodiment is an improvement over the above embodiment. As shown in Fig. 9 and Fig. 10, axially, the middles of the front cavity 4 and the rear cavity 5 are flat. Two side ends of the bottoms of the front cavity and the rear cavity are radially sunk respectively to form a left pressing groove 41 and a right pressing groove 42; a right pressing groove wall 421 parallel to the outer side wall of the mandrel 1 is formed at one side in the left pressing groove 41 close to the mandrel 1; and a left pressing groove wall 411 parallel to the outer side wall of the mandrel 1 is formed at one side in the right pressing groove 42 close to the mandrel 1. When the liquid composite node is impacted by a right load, the liquid in the left pressing groove 41 forms a pressure on the right pressing groove wall 421, and a corresponding reaction force is formed on the right pressing groove wall 421, so that the right stiffness of the liquid composite node is increased. When the liquid composite node is impacted by a left load, the liquid in the right pressing groove 42 forms a pressure on the left pressing groove wall 411, and a corresponding reaction force is formed on the left pressing groove wall 411, so that the left stiffness of the liquid composite node is increased.

To sum up, in the present application, the front cavity 4 and the rear cavity 5 are arranged in the liquid composite node, which satisfies the need of radial low stiffness at low frequency vibration to ensure good comfort during starting acceleration and braking of a train and good ability to pass a curve, and satisfies the need of high stiffness at high frequency vibration to ensure the stability of the train during operation at high speed and further increase the critical operation speed of the train. At the same time, the left pressing groove 41 and the right pressing groove 42 are arranged at two side ends of the bottoms of the front cavity 4 and the rear cavity 5 respectively, which improves the axial stiffness of the liquid composite node and avoids great transverse swing of the vehicle body and the bogie relative to the wheel set.

As shown in Fig. 9 and Fig. 10, the left pressing groove 41 and the right pressing groove 42 are V-shaped grooves, and wall surfaces of the right pressing groove wall 421 and the left pressing groove wall 411 are bevels. In this way, normal forces F1 and F2 acting on the right pressing groove wall 421 and the left pressing groove wall 411 have a right component F01 and a left component F02 respectively. The axial stiffness of the liquid composite node is increased by F01 and F02. At the same time, because the normal forces F1 and F2 have oblique angles relative to the axial direction and the radial direction of the liquid composite node, the structure not only enhances the axial stiffness, but also makes the liquid composite node conform to the characteristics of multidirectional stress and multidirectional torsion.

The left compression-expansion end 202 and the right compression-expansion end 203 are inclined. Further, the left compression-expansion end 202 and the right compression-expansion end 203 have an angle of 40-60° relative to the axis of the mandrel 1. In this way, the normal force f1 of the left compression-expansion end 202 and the normal force f2 of the right compression-expansion end 203 born by a left outer conical surface 104 of the mandrel ball and a right outer conical surface 105 of the mandrel ball can form a right axial component f01 and a left axial component f02 respectively, to obtain greater axial stiffness. The radial force born by the liquid composite node is a relatively weak shear force with a large stroke through this angle, so as to adapt to the need of weak radial stiffness at low frequency and large amplitude.

### Embodiment 4

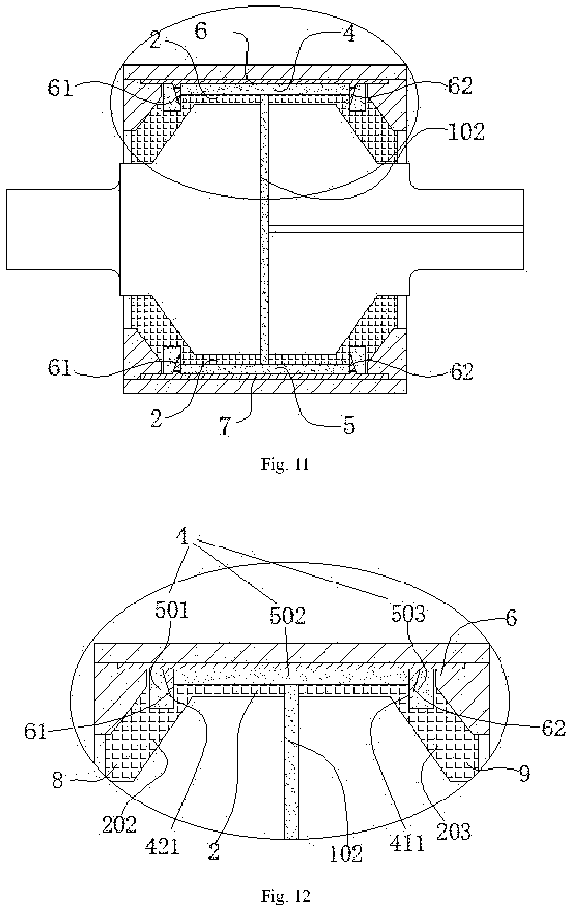

The present embodiment is an improvement based on embodiment 3. As shown in Fig. 11 and Fig. 12, the differences of the present embodiment from embodiment 3 are that the wall surfaces of the right pressing groove wall 421 and the left pressing groove wall 411 are perpendicular planes perpendicular to the axis of the mandrel 1; the inner walls of both ends of the front sealing cover plate 6 and the rear sealing cover plate 7 are provided with a left baffle rib plate 61 and a right baffle rib plate 62 which are radially stretched respectively; the left baffle rib plate 61 and the right baffle rib plate 62 are pasted on the right pressing groove wall 421 and the left pressing groove wall 411 respectively and can relatively slide vertically; and the front cavity 4 and the rear cavity 5 are divided from left to right into a left buffer region 501, a middle radial pressure regulating region 502 and a right buffer region 503. In this way, the right pressing groove wall 421 and the left pressing groove wall 411 directly provide axial pressure for the left baffle rib plate 61 and the right baffle rib plate 62, respectively, to ensure that the axial stiffness of the liquid composite node fully satisfies design requirements, but the need of weak radial stiffness is not affected at low frequency vibration. Because both sides of the middle radial pressure regulating region 502 are blocked by the left baffle rib plate 61 and the right baffle rib plate 62 at high frequency vibration, the incompressible liquid is difficult to diffuse to both sides, and the liquid in the flow channel 102 tends to be unable to flow directionally with the increase of frequency, which is very conducive to the sudden increase of the radial stiffness of the liquid composite node at high frequency vibration.

Small gaps are formed respectively between the left baffle rib plate 61 and the right pressing groove wall 421 and between the right baffle rib plate 62 and the left pressing groove wall 411 to fill the left buffer region 501 and the right buffer region 503 with liquid.

### Embodiment 5

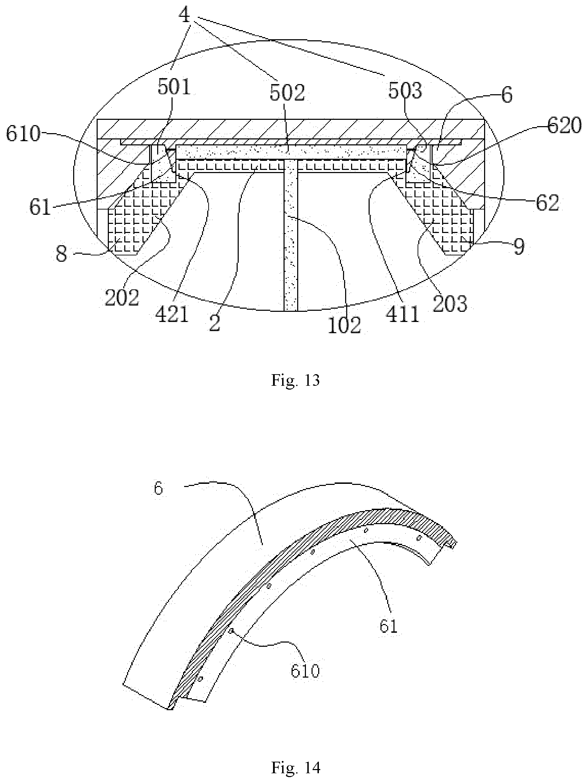

The present embodiment is an improvement based on embodiment 4. As shown in Fig. 13 and Fig. 14, the differences are that the left baffle rib plate 61 is provided with a left buffer flow channel 610 for communicating the left buffer region 501 and the middle radial pressure regulating region 502, and the right baffle rib plate 62 is provided with a right buffer flow channel 620 for communicating the right buffer region 503 and the middle radial pressure regulating region 502. Because the outer sides of the left buffer region 501 and the right buffer region 503 are the left compression-expansion end 202 and the right compression-expansion end 203 which can compress and expand outwards to the left and right sides respectively, the left buffer region 501 and the right buffer region 503 are the regions with relatively weak stiffness. In the present embodiment, the middle radial pressure regulating region 502 is communicated with the left buffer region 501 and the right buffer region 503 through the left buffer flow channel 610 and the right buffer flow channel 620 respectively, which ensures the high stiffness need at high frequency vibration that the left buffer flow channel 610 and the right buffer flow channel 620 still cannot directionally flow at high frequency vibration and the liquid in the middle radial pressure regulating region 502 can be exchanged with the liquid in the left buffer region 501 and the right buffer region 503 through the left buffer flow channel 610 and the right buffer flow channel 620 respectively at low frequency vibration, so as to satisfy the need of reducing the radial stiffness of the liquid composite node at low frequency vibration.

### Embodiment 6

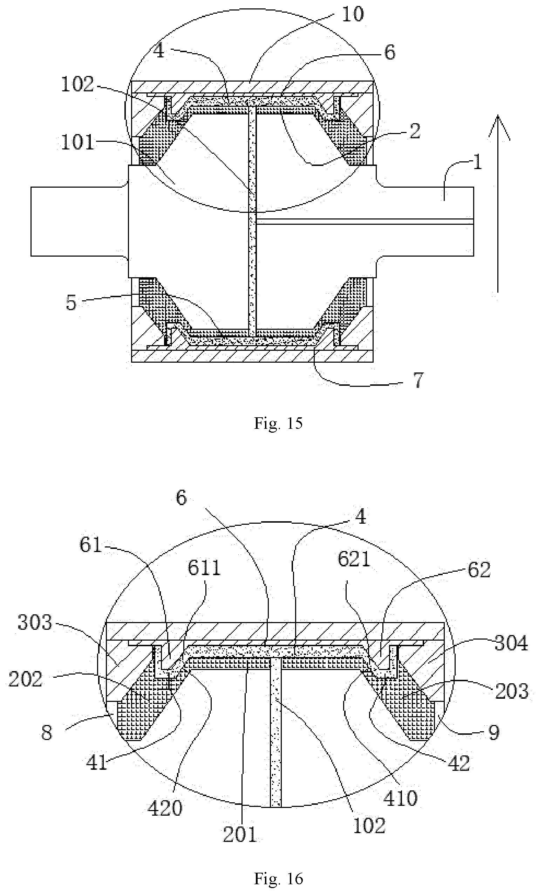

The present embodiment is an improvement based on embodiment 3. As shown in Fig. 15 and Fig. 16, the inner walls of both ends of the front sealing cover plate 6 and the rear sealing cover plate 7 are provided with the left baffle rib plate 61 and the right baffle rib plate 62 which extend toward the mandrel 1 respectively; a left liquid passing gap 611 through which liquid passes is formed between the left baffle rib plate 61 and a right groove wall 420 of the left pressing groove 41, and a right liquid passing gap 621 through which liquid passes is formed between the right baffle rib plate 62 and a left groove wall 410 of the right pressing groove 42. The flow of the liquid in the front cavity 4 and the rear cavity 5 is regulated by controlling the sizes of the left liquid passing gap 611 and the right liquid passing gap 621.

### Embodiment 7

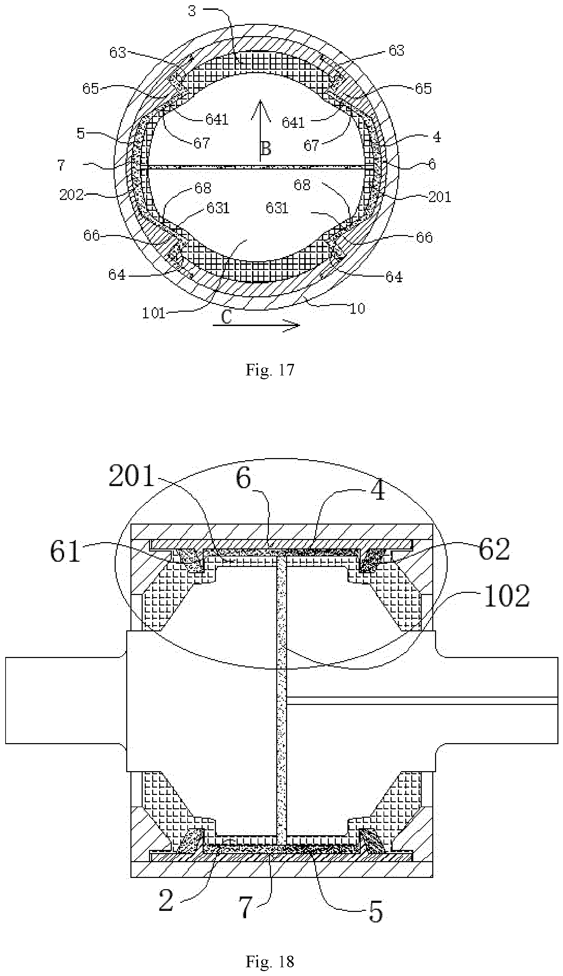

The present embodiment is an improvement over the above embodiment. As shown in Fig. 17 and Fig. 18, the upper and lower ends of the bottoms of the front cavity 4 and the rear cavity 5 are radially sunk respectively to form an upper side pressing groove 63 and a lower side pressing groove 64; the left pressing groove 41, the upper side pressing groove 63, the right pressing groove 42 and the lower side pressing groove 64 are intersected and connected in a rectangular ring; an upper restriction bulge 65 and a lower restriction bulge 66 which are inserted into the upper side pressing groove 63 and the lower side pressing groove 64 are arranged on the upper and lower sides of the front sealing cover plate 6 and the rear sealing cover plate 7 respectively; and the left baffle rib plate 61, the upper restriction bulge 65, the right baffle rib plate 62 and the lower restriction bulge 66 are intersected and connected in a rectangular ring. An upper liquid passing gap 67 through which liquid passes is formed between the upper restriction bulge 65 and a lower side groove wall 641 of the upper side pressing groove 63, and a lower liquid passing gap 68 through which liquid passes is formed between the lower restriction bulge 66 and an upper side groove wall 631 of the lower side pressing groove 64. The upper restriction bulge 65, the lower restriction bulge 66, the upper liquid passing gap 67 and the lower liquid passing gap 68 are also arranged to satisfy the need of small stiffness at low frequency vibration and satisfy the need of large stiffness at high frequency vibration. The action principle is exactly the same as that of the arrangement of the left baffle rib plate 61, the right baffle rib plate 62, the left liquid passing gap 611 and the right liquid passing gap 621 in embodiment 1.

### Embodiment 8

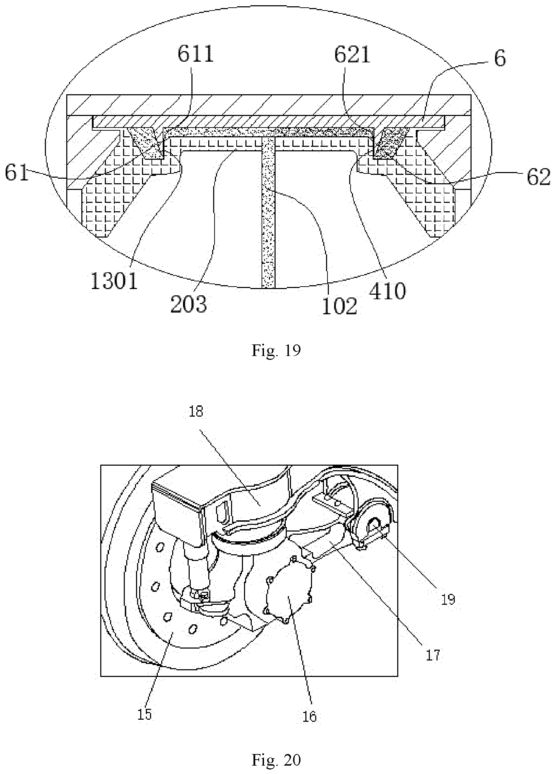

The present embodiment is an improvement based on embodiment 4 with reference to embodiment 6. As shown in Fig. 19 and Fig. 20, the wall surfaces of the right pressing groove wall 421 and the left pressing groove wall 411 in the present embodiment are perpendicular planes perpendicular to the axis of the mandrel 1; a left liquid passing gap 611 through which liquid passes is formed between the left baffle rib plate 61 and a right groove wall 420 of the left pressing groove 41, and a right liquid passing gap 621 through which liquid passes is formed between the right baffle rib plate 62 and a left groove wall 410 of the right pressing groove 42. However, the left liquid passing gap 611 and the right liquid passing gap 621 are much smaller than the left liquid passing gap 611 and the right liquid passing gap 621 of embodiment 1. When impacted by a right load, the left baffle rib plate 61 can be pressed against the right groove wall 420, thereby increasing the right axial stiffness of the liquid composite node. When impacted by a left load, the right baffle rib plate 62 can be pressed against the left groove wall 410, thereby increasing the left axial stiffness of the liquid composite node. In this way, the axial stiffness of the liquid composite node can be increased while the ratio of dynamic stiffness and static stiffness is improved.

### Embodiment 9

The present embodiment is a single stage suspension system, as shown in Fig. 20, comprising a wheel set 15, an axle box 16, a tumbler 17, a frame 18 and the above liquid rubber composite node 19. The solid line in the figure shows the liquid rubber composite node 19. The liquid rubber composite node 19 is installed in the tumbler 17 and is connected with the wheel set 15, the axle box 16 and the frame 18 to provide transverse and longitudinal positioning of the wheel set 15 and release vertical constraints of the frame 18 and the wheel set 15, so as to achieve decoupling of the stiffness of the single stage suspension system in three directions. At the same time, the liquid rubber composite node 19 also plays a role of transferring traction, braking and vibration impact loads between the frame 18 and the wheel set 15, and is an important component to ensure the dynamic performance and safe operation of the vehicle.

Although the embodiments of the present invention have been shown and described, it will be appreciated that various variations, amendments, replacements and modifications can be made by those ordinary skilled in the art without departing from the principle and spirit of the present invention, and the scope of the present invention is limited by the appended claims and the equivalents thereof.

## Claims

1. A liquid rubber composite node for reducing vehicle wheel-rail wear and vibration noise based on liquid damping, comprising a mandrel (1) with a mandrel ball (101) in middle, rubber layers (2) vulcanized and bonded around the mandrel ball (101), and an inner sleeve (3) vulcanized and bonded with the rubber layer at a periphery of the rubber layers (2); **characterized in that**: a front cavity (4) and a rear cavity (5) with rubber layers (2) at cavity bottoms are arranged in the inner sleeve (3) on a front side and a rear side of the liquid composite node respectively; the mandrel ball (101) is provided with a flow channel (102) for communicating the front cavity (4) and the rear cavity (5); the axial widths of the axial sections of the front cavity (4) and the rear cavity (5) are greater than radial heights, and the front cavity (4), the rear cavity (5) and the flow channel (102) are filled with liquid; the inner sleeve (3) on the front side and the rear side of the liquid composite node is provided with a front frame port (301) and a rear frame port (302); a front sealing cover plate (6) and a rear sealing cover plate (7) are arranged on the front frame port (301) and the rear frame port (302) respectively; the front sealing cover plate (6), the front frame port (301) and the rubber layer (2) form the front cavity (4); and the rear sealing cover plate (7), the rear frame port (302) and the rubber layer (2) form the rear cavity (5); the front and rear periphery of the middle of the mandrel ball (101 is a cylindrical surface, and central regions of the rubber layers (2) at the bottoms of the front cavity (4) and the rear cavity (5) are middle uniform regions (201) with uniform thickness; the left and right ends of the inner sleeve (3) are furled inward respectively to form a left retaining ring (303) and a right retaining ring (304); an inner wall of the left retaining ring (303) is a left stopping inner conical surface (3031) inclined to the left, and an inner wall of the right retaining ring (304) is a right stopping inner conical surface (3041) inclined to the right; the rubber layer between the left stopping inner conical surface (3031) and a left end surface of the mandrel ball (101) is a left compression-expansion end (202), and the rubber layer between the right stopping inner conical surface (3041) and a right end surface of the mandrel ball (101) is a right compression-expansion end (203); the thickness of the middle uniform regions (201) is less than the thickness of the left compression-expansion end (202) and the right compression-expansion end (203).

2. The liquid rubber composite node for reducing vehicle wheel-rail wear and vibration noise based on liquid damping according to claim 1, **characterized in that**: a radian r between two edges of the radial sections of the front cavity (4) and the rear cavity (5) is 90-120°.

3. The liquid rubber composite node for reducing vehicle wheel-rail wear and vibration noise based on liquid damping according to claim 1, **characterized in that**: the middle uniform regions (201) of the rubber layers (2) at the bottoms of the front cavity (4) and the rear cavity (5) are provided with a front pit and a rear pit respectively; inner walls of the front pit and the rear pit are provided with a rigid front basin (11) and a rear basin (12) respectively; the bottoms of the front sealing cover plate (6) and the rear sealing cover plate (7) are provided with a front pressing table (601) and a rear pressing table (702) which extend into basin cavities of the front basin (11) and the rear basin (12) respectively; liquid containing spaces (13) are formed between bottom surfaces of the front pressing table (601) and the rear pressing table (702) and bottoms of the front basin (11) and the rear basin (12); and liquid flow gaps (14) are formed between the periphery of the front pressing table (601) and the rear pressing table (702) and the inner walls of the front basin (11) and the rear basin (12) respectively.

4. The liquid rubber composite node for reducing vehicle wheel-rail wear and vibration noise based on liquid damping according to claim 1, **characterized in that**: the left compression-expansion end (202) and the right compression-expansion end (203) are inclined.

5. The liquid rubber composite node for reducing vehicle wheel-rail wear and vibration noise based on liquid damping according to claim 4, **characterized in that**: the left compression-expansion end (202) and the right compression-expansion end (203) have an angle of 40-60° relative to the axis of the mandrel (1).

6. The liquid rubber composite node for reducing vehicle wheel-rail wear and vibration noise based on liquid damping according to claim 1, **characterized in that**: two side ends of the bottoms of the front cavity (4) and the rear cavity (5) are radially sunk respectively to form a left pressing groove (41) and a right pressing groove (42); a right pressing groove wall (421) parallel to the outer side wall of the mandrel (1) is formed at one side in the left pressing groove (41) close to the mandrel (1); and a left pressing groove wall (411) parallel to the outer side wall of the mandrel (1) is formed at one side in the right pressing groove (42) close to the mandrel (1).

7. The liquid rubber composite node for reducing vehicle wheel-rail wear and vibration noise based on liquid damping according to claim 6, **characterized in that**: the wall surfaces of the right pressing groove wall (421) and the left pressing groove wall (411) are perpendicular planes perpendicular to the axis of the mandrel (1); the inner walls of both ends of the front sealing cover plate (6) and the rear sealing cover plate (7) are provided with a left baffle rib plate (61) and a right baffle rib plate (62) which are radially stretched respectively; the left baffle rib plate (61) and the right baffle rib plate (62) are pasted on the right pressing groove wall (421) and the left pressing groove wall (411) respectively and can relatively slide vertically; and the front cavity (4) and the rear cavity (5) are divided from left to right into a left buffer region (501), a middle radial pressure regulating region (502) and a right buffer region (503).

8. The liquid rubber composite node for reducing vehicle wheel-rail wear and vibration noise based on liquid damping according to claim 7, **characterized in that**: the left baffle rib plate (61) is provided with a left buffer flow channel (610) for communicating the left buffer region (501) and the middle radial pressure regulating region (502), and the right baffle rib plate (62) is provided with a right buffer flow channel (620) for communicating the right buffer region (503) and the middle radial pressure regulating region (502).

9. The liquid rubber composite node for reducing vehicle wheel-rail wear and vibration noise based on liquid damping according to claim 6, **characterized in that**: a left liquid passing gap (611) through which liquid passes is formed between the left baffle rib plate (61) and a right groove wall (420) of the left pressing groove (41), and a right liquid passing gap (621) through which liquid passes is formed between the right baffle rib plate (62) and a left groove wall (410) of the right pressing groove (42).

10. The liquid rubber composite node for reducing vehicle wheel-rail wear and vibration noise based on liquid damping according to claim 1, **characterized in that**: an upper restriction bulge (65) and a lower restriction bulge 66 which are inserted into the upper side pressing groove (63) and the lower side pressing groove (64) are arranged on the upper and lower sides of the front sealing cover plate (6) and the rear sealing cover plate (7) respectively.

11. The liquid rubber composite node for reducing vehicle wheel-rail wear and vibration noise based on liquid damping according to claim 10, **characterized in that**:
an upper liquid passing gap (67) through which liquid passes is formed between the upper restriction bulge (65) and a lower side groove wall (641) of the upper side pressing groove (63), and a lower liquid passing gap (68) through which liquid passes is formed between the lower restriction bulge (66) and an upper side groove wall (631) of the lower side pressing groove (64).

12. A single stage suspension system comprises a wheel set (15), an axle box (16), a tumbler (17), a frame (18) and the liquid rubber composite node in claim 1, the liquid rubber composite node (19) is installed in the tumbler (17) and is connected with the wheel set (15), the axle box (16) and the frame (18).

13. A railway vehicle comprises a vehicle body and a bogie, and the bogie uses the single stage suspension system in claim 12.
